(19) Europäisches Patentamt
European Patent Office
Office européen des brevets

(11) **EP 1 544 078 B1**

(12) **FASCICULE DE BREVET EUROPEEN**

(45) Date de publication et mention de la délivrance du brevet:
**13.04.2011 Bulletin 2011/15**

(51) Int Cl.:
***B62D 5/065*** *(2006.01)*

(21) Numéro de dépôt: **04292988.5**

(22) Date de dépôt: **14.12.2004**

(54) **Système d'assistance de direction électrohydraulique pour véhicule automobile**

Elektro-hydraulisches Servolenkungssystem für ein Kraftfahrzeug

Electro-hydraulic power steering system for a motor vehicle

(84) Etats contractants désignés:
**DE ES FR GB IT**

(30) Priorité: **18.12.2003 FR 0314944**

(43) Date de publication de la demande:
**22.06.2005 Bulletin 2005/25**

(73) Titulaire: **HYDROPERFECT INTERNATIONAL HPI**
**94430 Chennevieres sur Marne (FR)**

(72) Inventeurs:
• **Lesther, Nicaise**
**94000 Créteil (FR)**
• **Caresche, François**
**91450 Etiolles (FR)**
• **Chaigne, Gabriel**
**94100 Saint-Maur des Fosses (FR)**

(74) Mandataire: **Thinat, Michel**
**Cabinet Madeuf,**
**56 A, rue du Faubourg Saint-Honoré**
**75008 Paris (FR)**

(56) Documents cités:
**EP-A- 0 731 013     DE-A1- 10 319 537**
**FR-A- 2 486 898**

• **PATENT ABSTRACTS OF JAPAN vol. 2002, no. 09, 4 septembre 2002 (2002-09-04) & JP 2002 154449 A (KOYO SEIKO CO LTD), 28 mai 2002 (2002-05-28)**
• **PATENT ABSTRACTS OF JAPAN vol. 1997, no. 08, 29 août 1997 (1997-08-29) & JP 09 095251 A (MITSUBISHI MOTORS CORP), 8 avril 1997 (1997-04-08)**
• **PATENT ABSTRACTS OF JAPAN vol. 1999, no. 13, 30 novembre 1999 (1999-11-30) & JP 11 227620 A (KAYABA IND CO LTD), 24 août 1999 (1999-08-24)**

**EP 1 544 078 B1**

**Description**

L'invention concerne un système d'assistance de direction électro-hydraulique pour véhicule automobile comprenant un volant de direction solidaire en rotation d'une colonne de direction destiné à déterminer l'orientation des roues directrices du véhicule, par l'intermédiaire d'un dispositif de direction à vérin hydraulique intégré, ledit système comprenant une pompe d'assistance entraînée en rotation par un moteur électrique sous la commande d'un calculateur en fonction d'un signal représentatif de la vitesse du véhicule et d'un signal représentatif de la vitesse de variation de l'angle du volant de direction.

Dans les systèmes de ce type, qui sont connus, (par exemple du document DE10319537A1), le signal représentatif de la vitesse de variation de l'angle du volant est fourni par un capteur d'angle. Ces systèmes connus présentent l'inconvénient que la présence d'un tel capteur augmente le prix de revient du système, d'une manière notable.

La présente invention a pour but de palier cet inconvénient.

Pour atteindre ce but, un système d'assistance selon l'invention est caractérisé en ce que le dispositif générateur du signal représentatif de la vitesse de variation de l'angle du volant de direction est un dispositif adapté pour établir ce signal à partir du courant du moteur de commande de la pompe d'assistance.

Selon une caractéristique de l'invention, le signal précité est dérivé de la vitesse de variation de la consommation du courant du moteur électrique.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels:

- la figure 1 est un schéma synoptique d'un système d'assistance électro-hydraulique de direction d'un véhicule automobile, selon l'invention ;
- la figure 2 donne le schéma synoptique du calculateur CA du système d'assistance selon la figure 1 ;
- la figure 3 représente sous forme d'un schéma bloc le processus du calcul de la vitesse du volant tel qu'exécuté par le calculateur selon la figure 2, et
- la figure 4 illustre sous forme de courbes caractéristique la relation existant entre la vitesse V du véhicule et la vitesse de rotation VM du moteur d'entraînement de la pompe du système d'assistance ainsi que différents niveaux de la vitesse VCM de la variation du courant du moteur, indiqués en tant que paramètres.

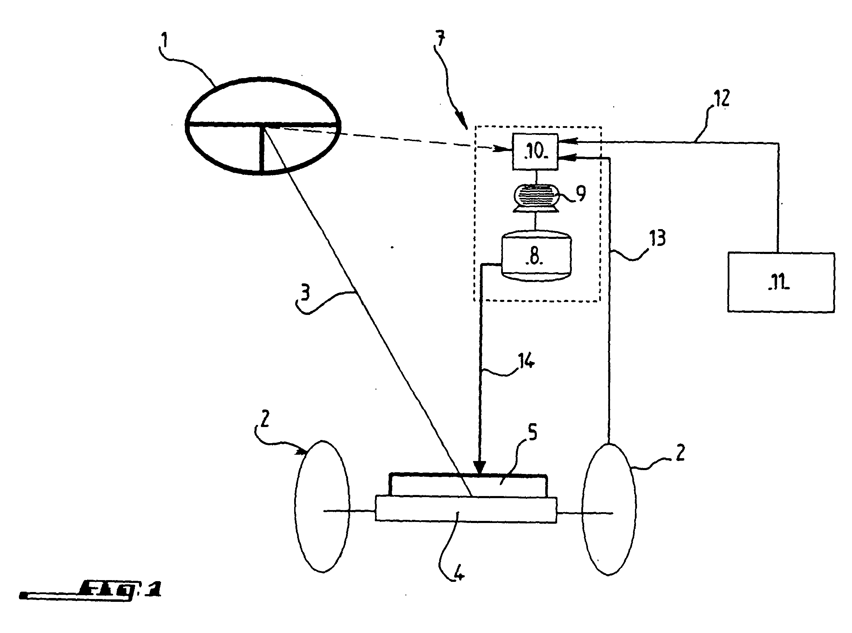

La figure 1 présente sous forme d'un schéma synoptique la structure générale d'un système d'assistance électro-hydraulique de direction d'un véhicule automobile. Comme l'illustre la figure, le volant 1 du véhicule permet au conducteur d'un véhicule de déterminer l'orientation des roues directrices 2 du véhicule par l'intermédiaire de la colonne de direction indiquée en 3 et du dispositif mécanique de direction 4 à vérin hydraulique intégré 5. Ce vérin est commandé par un groupe électro-pompe 7 qui comporte essentiellement une pompe hydraulique 8, un moteur 9 d'entraînement de la pompe et un calculateur 10. Ce dernier a pour fonction, entre autre, de piloter le moteur 9 si bien que l'alimentation en énergie électrique du moteur se fait à partir d'une batterie 11, par l'intermédiaire du calculateur 10, comme cela est illustré par la ligne fléchée 12. La ligne fléchée 13 indique que le calculateur 10 reçoit par un capteur de la vitesse du véhicule, qui n'est pas représenté spécifiquement, l'information sur cette vitesse de véhicule. La ligne fléchée 14 symbolise le circuit hydraulique reliant le vérin 5 à la pompe 8.

La structure générale qui vient d'être décrite étant connue en soi, il n'est pas nécessaire de la décrire plus en détail.

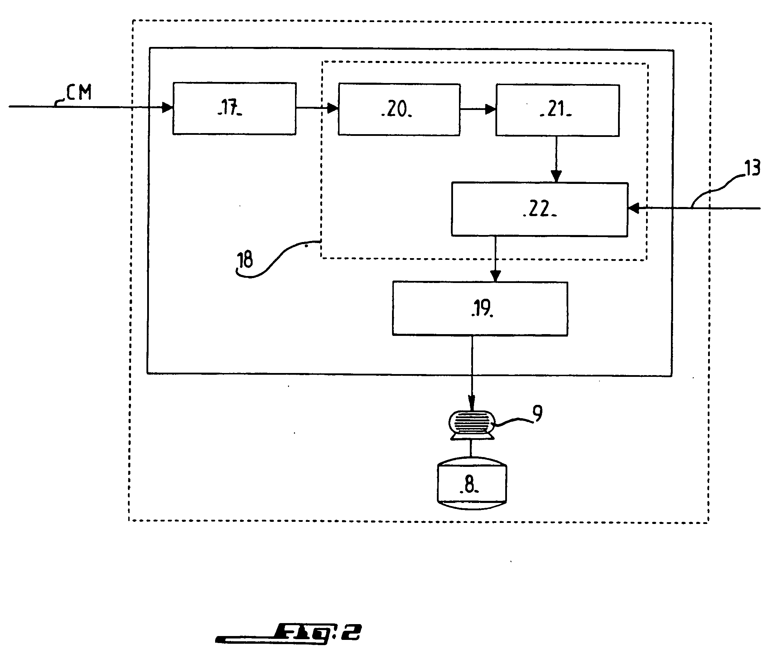

On décrira ci-après en se référant à la figure 2 ce qui relève spécifiquement de l'invention et permet de remplacer le capteur d'angle qui est associé typiquement au volant 1 et a pour fonction d'envoyer au calculateur 10 l'information sur la vitesse angulaire du volant 1. Etant donné que le système selon l'invention n'a plus besoin d'un tel capteur, la fonction de celui-ci n'est indiquée que par une ligne fléchée interrompue, de surcroît barrée pour faire apparaître clairement la suppression de ce capteur.

En se référant à la figure 2, qui illustre sous forme d'un schéma synoptique les différentes fonctions du calculateur 10 dans la mise en oeuvre de l'invention, on constate que le calculateur comporte des moyens 17 de mise en forme du courant CM fourni par la batterie 11, un microprocesseur 18 qui est destiné à établir par calcul, à partir du signal reçu des moyens de mise en forme 17, la vitesse angulaire correspondante du volant et la consigne moteur qui sera alors appliquée au moteur 9 après l'avoir mis en forme par un circuit 19. Plus précisément le microprocesseur 18 procède à une mise en forme de l'information reçue du circuit 17, en 20. Après cette mise en forme le microprocesseur 18 effectue en 21 le calcul de la vitesse angulaire du volant et en 22 le calcul de la vitesse consigne moteur en fonction de l'information sur la vitesse du véhicule, comme cela est schématiquement illustré par la ligne fléchée 13.

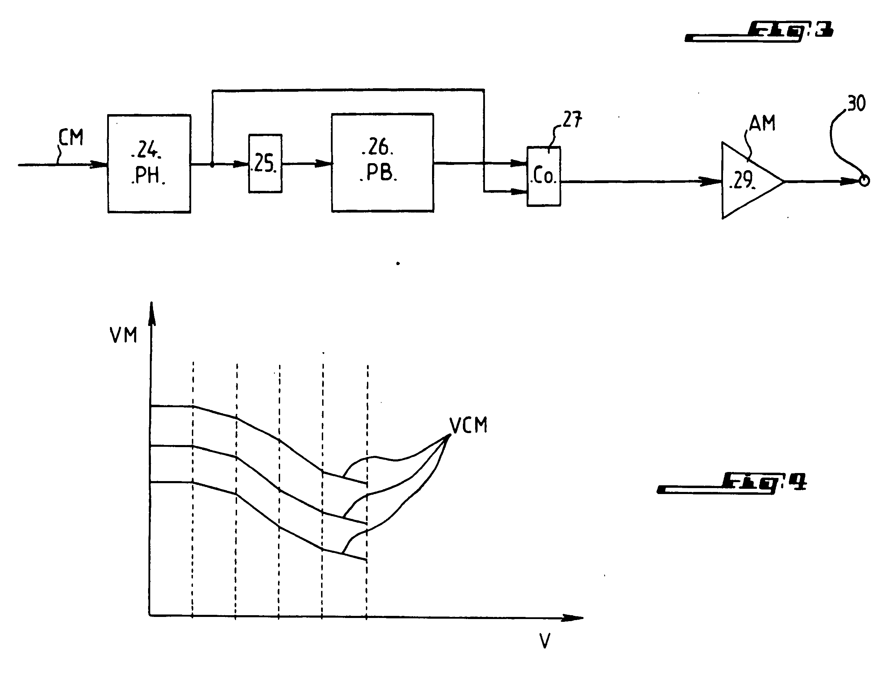

La figure 3 montre plus en détail l'établissement de la commande à partir du courant CM fourni par la batterie.

Comme le montre cette figure, on fait passer le courant Cb tout d'abord par un filtre passe-haut PH désigné par 24, puis on calcule en 25 la valeur absolue du signal de sortie du filtre et procède à un filtrage par un filtre estimateur désigné par la référence 26 qui est réalisé sous forme d'un filtre passe-bas PB. Le signal de sortie de ce filtre PB peut être appliqué, à un comparateur CO portant la référence 27 qui reçoit à une deuxième entrée le signal de sortie du filtre passe-haut PH. Le signal de sortie du comparateur est transmis par l'intermédiaire d'un amplificateur AM désigné par la référence 29 à la borne de sortie 30. Le signal disponible à cette borne est représentatif de la vitesse angulaire du volant et constitue, dans le cadre de la figure 2, le signal à la sortie de la case 21.

Plus précisément, le filtre passe-haut est avantageusement un filtre du type Butterworth ou un équivalent de celui-ci et est utilisé pour supprimer la composante de courant continu. Ce filtre pourrait être un filtre de quatrième ordre défini par la formule qui suit

$$S(n) = A3 \times S(n-3) + A2 \times S(n-2) + A1 \times S(n-1) + B3 \times E(n-3) + B2 \times E(n-2) + B1 \times E(n-1) + B0 \times E(n),$$

A et B étant des coefficients, E une valeur d'entrée et n indiquant qu'il s'agit de l'opération de traitement en cours effectuée par le calculateur, une opération de lecture de la consommation du courant du moteur et du traitement par le microprocesseur étant effectuée à des intervalles prédéterminés, par exemple toutes les millisecondes.

A titre d'exemple, les coefficients pourraient avoir les valeurs suivantes:

A1 = 0,9509253 ;
A2 = 0 ;
A3 = 0 ;
B0 = 0,97546137 ;
B1 = 0,97546137 ;
B2 = 0 ;
B3 = 0 ;

Ces coefficients seront mémorisés dans une mémoire du type EEPROM pour être accessibles et modifiables. Le filtre passe-haut doit avoir un gain unitaire.

Le filtre estimateur ou passe-bas PB 26 est de préférence également un filtre du type Butterworth ou d'un type équivalent et a pour fonction d'éliminer le bruit haute fréquence et de créer un effet mémoire sur le signal dans le but de permettre la création d'un couple de retour du volant qui correspond au couple d'assistance qui vient d'être fourni par le système.

Ce filtre peut être défini par l'expression suivante d'un filtre de quatrième ordre

$$S(n) = A3.S(n-3) + A2.S(n-2) + A1.S(n-1) + B3.E(n-3) + B2.E(n-2) + B1.E(n-1) + B0.E(n)$$

A et B représentant à nouveau des coefficients qui sont avantageusement mémorisés dans une mémoire du type EEPROM de façon à être modifiables. Le filtre a un gain unitaire. A titre d'exemple, les coefficients pourraient avoir les valeurs suivantes:

A1 = 0,3894033 ;
A2 = 0,31848063 ;
A3 = 0,24487242 ;
B0 = 0,00927732 ;
B1 = 0,02734368 ;
B2 = 0,01611324 ;
B3 = -0,00537108

Le comparateur CO 27 a pour fonction de comparer les signaux de sortie des filtres PH et PB et produit en sortie le signal le plus élevé des deux. Ce comparateur permet une variation de la réactivité du système. Ainsi, un gain supérieur à 1 est appliqué au signal du filtre passe-haut pour augmenter la réactivité. Ce gain est variable en fonction de la vitesse du véhicule et sera mémorisé et modifiable dans une mémoire du type EEPROM.

Les valeurs de gain assorties aux vitesses du véhicule sont mémorisées dans une matrice qui comporte par exemple six valeurs spécifiques, les autres valeurs peuvent être déterminées par extrapolation par exemple linéaire.

Le traitement du courant fourni par la batterie 11 tel que décrit ci-avant permet l'obtention d'une matrice de paramétrage comme représentée ci-après, qui comporte un certain nombre de points indiquant pour des valeurs de la vitesse de véhicule V en Km/h indiquées dans la colonne de gauche et des valeurs de la vitesse angulaire en °/sec obtenues par calcul et indiquées dans la rangée supérieure, les valeurs associées de la vitesse de rotation VM du moteur 9 d'entraînement de la pompe 10.

Vitesse de rotation du moteur d'assistance [tours/min]

| Vitesse du véhicule V [Km/h] | Vitesse angulaire [°/sec] | | | | | |
|---|---|---|---|---|---|---|
| | 0 | 133 | 268 | 375 | 597 | 852 |
| 0 Km/h | 3600 | 3717 | 4438 | 4844 | 4814 | 4737 |
| 25 Km/h | 3300 | 3417 | 4087 | 4535 | 4751 | 4751 |
| 50 Km/h | 3100 | 3217 | 3736 | 4310 | 4575 | 4772 |
| 100 Km/h | 2000 | 2117 | 2697 | 3335 | 4253 | 4772 |
| 140 Km/h | 1500 | 1583 | 1827 | 2409 | 3474 | 4604 |
| 250 Km/h | 900 | 1017 | 1500 | 2100 | 3165 | 4407 |

Les points qui sont indiqués dans la matrice constituent des points d'appui qui peuvent être choisis arbitrairement et permettent l'établissement des valeurs intermédiaires par extrapolation, par exemple linéaire, des valeurs d'appui. Le choix des points d'appui peut être fait judicieusement en fonction de la précision souhaitée de la réponse du système d'assistance, dans certaines plages de valeurs de vitesse du véhicule. En effet, c'est à partir de cette matrice que le microprocesseur détermine la vitesse de rotation qu'il convient d'imprimer au moteur 9 pour que la pompe 8 entraînée par le moteur, puisse fournir l'assistance appropriée.

La figure 4 illustre à l'aide d'une série de courbes caractéristiques, chacune pour un niveau de la vitesse VCM de variation du courant du moteur la relation entre la vitesse de rotation VM du moteur de pompe et la vitesse V du véhicule, chaque courbe constituant une ligne brisée, les points d'inflexion constituant les points d'appui de la matrice.

Il est à noter que, sur la figure 4, les courbes extrêmes inférieure et supérieure constituent des courbes indicatrices de la vitesse d'assistance minimale et maximale fournie par le moteur. La courbe inférieure indique la vitesse moteur de ralenti lorsque le niveau de la vitesse de variation du courant moteur est zéro et aucune assistance n'est demandée, la courbe supérieure représentant l'assistance maximale.

Concernant le fonctionnement du système selon l'invention, une demande d'assistance est détectée à l'aide de la consommation du courant du moteur 9 d'entraînement de la pompe 8. Lors d'un actionnement du volant, la charge du moteur augmente et, en fonction de cette augmentation de la charge, la consommation du courant augmente également. Ceci permet de détecter une demande d'assistance sans qu'il soit nécessaire de disposer d'un capteur d'angle et permet d'obtenir le niveau de l'assistance approprié. Plus précisément, tant que le conducteur du véhicule n'actionne pas le volant, le moteur de la pompe du système d'assistance tourne sans charge à une vitesse de ralenti, qui varie en fonction de la vitesse du véhicule. Suite à un actionnement du volant et par conséquent à une demande d'assistance, le moteur d'assistance tourne à une vitesse d'assistance appropriée qui varie en fonction de la vitesse du véhicule et de la vitesse de la variation du courant du moteur. Lorsque le système constate qu'il n'y a plus de demande d'assistance, le moteur revient à sa vitesse de ralenti initiale.

Il est à noter que diverses modifications peuvent être apportées au système tel que décrit et représenté. Par exemple le calcul de la vitesse angulaire du volant effectué par le microprocesseur pourrait être faite selon tout autre manière appropriée et, dans le cadre du calcul qui vient d'être décrit à titre d'exemple, les fonctions de filtrage pourraient être faites selon toute autre expression de filtrage que celle donnée plus haut et dans ces expressions les coefficients pourraient être choisies à toute autre valeur appropriée.

**Revendications**

1. Système d'assistance électro-hydraulique de direction pour véhicule automobile comprenant un volant de direction (1) solidaire en rotation d'une colonne de direction (3) destiné à déterminer l'orientation des roues directrices (2) du véhicule, par l'intermédiaire d'un dispositif de direction à vérin hydraulique intégré (5), ledit système comprenant une pompe d'assistance (8) entraînée en rotation par un moteur électrique (9) sous la commande d'un calculateur (10) en fonction d'un signal représentatif de la vitesse du véhicule et d'un signal représentatif de la vitesse de variation de l'angle du volant de direction, **caractérisé en ce que** le dispositif générateur du signal représentatif de la vitesse de variation de l'angle du volant de direction est un calculateur (10) adapté pour établir par calcul ce signal à partir du courant du moteur (9) de commande de la pompe d'assistance (8).

2. Système selon la revendication 1, **caractérisé en ce que** le signal précité est dérivé de la vitesse de variation de la consommation du courant du moteur électrique (9) fourni par le calculateur (10).

3. Système selon la revendication 2, **caractérisé en ce que** le calculateur (10) est programmé pour établir le signal représentatif de la vitesse de variation de l'angle du volant de direction par application aux valeurs de courant du moteur des fonctions de filtres passe-haut et passe-bas.

4. Système selon la revendication 3, **caractérisé en ce que** le calcul effectué par le calculateur (10) implique une fonction de comparateur des signaux de sortie des filtres passe-haut (24) et passe-bas (26), le signal de sortie étant le signal le plus élevé des deux filtres.

5. Système selon l'une des revendications 3 ou 4, **caractérisé en ce que** le calcul précité implique l'application d'un gain au signal du filtre passe-haut (24) qui varie en fonction de la vitesse du véhicule, pour modifier la réactivité du système.

**Claims**

1. An electro-hydraulic power steering system for a motor vehicle comprising a steering wheel (1), rotationally interdependent with a steering column (3) intended for determining the orientation of the steerable wheels (2) of the vehicle, via a steering device (5) with an integrated hydraulic actuator, said system comprising an auxiliary pump (8) driven into rotation by an electric motor (9), under the control of a computer (10) depending on a signal representative of the speed of the vehicle and on a signal representative of the rate of change of the steering wheel's angle, **characterized in that** the device generating the signal representative of the rate of change of the steering wheel's angle is a computer (10) adapted in order to establish by calculation this signal from the current of the motor (9) for controlling the auxiliary pump (8).

2. The system according to claim 1, **characterized in that** the aforementioned signal is derived from the rate of change of the current consumption of the electric motor (9) provided by the computer (10).

3. The system according to claim 2, **characterized in that** the computer (10) is programmed for establishing the signal representative of the rate of change of the steering wheel's angle by applying high pass and low pass filter functions to the values of the current of the motor.

4. The system according to claim 3, **characterized in that** the calculation performed by the computer (10) implies a function for comparing output signals from the high pass (24) and the low pass (26) filters, the output signal being the greatest signal of both filters.

5. The system (1) according to any of claims 3 or 4, **characterized in that** the aforementioned calculation implies the application of a gain to the signal from the high pass filter (24), which varies according to the speed of the vehicle, in order to modify the reactivity of the system.

**Patentansprüche**

1. Elektrohydraulisches Servolenkungssystem für ein Kraftfahrzeug, das ein mit einer Lenksäule (3) rotierend verbundenes Lenkrad (1) umfasst, das dazu bestimmt ist, die Ausrichtung der Leiträder (2) des Fahrzeugs über eine Lenkvorrichtung mit integriertem Hydraulikzylinder (5) zu bestimmen, wobei das System von einem Rechner (10) gesteuert in Abhängigkeit von einem für die Geschwindigkeit des Fahrzeugs repräsentativen Signals und von einem für die Geschwindigkeit der Änderung des Winkels des Lenkrads repräsentativen Signals über eine von einem Elektromotor (9) rotierend angetriebene Servopumpe (8) angetrieben wird, **dadurch gekennzeichnet, dass** die Vorrichtung, die das für die Geschwindigkeit der Änderung des Winkels des Lenkrads repräsentative Signal erzeugt, ein Rechner (10) ist, der geeignet ist, dieses Signal ausgehend vom Strom des Motors (9) zur Steuerung der Servopumpe (8) durch Berechnung zu ermitteln.

2. System nach Anspruch 1, **dadurch gekennzeichnet, dass** das vorgenannte, vom Rechner (10) gelieferte Signal von der Geschwindigkeit der Änderung des Stromverbrauchs des Elektromotors (9) abgeleitet ist.

3. System nach Anspruch 2, **dadurch gekennzeichnet, dass** der Rechner (10) programmiert ist, um das für die Geschwindigkeit der Änderung des Winkels des Lenkrads repräsentative Signal durch Anwendung von Hochpassfilter- und Tiefpassfilterfunktionen auf die Stromwerte des Motors zu ermitteln.

4. System nach Anspruch 3, **dadurch gekennzeichnet, dass** die vom Rechner (10) durchgeführte Berechnung eine Vergleichsfunktion der Ausgangssignale der Hochpass- (24) und Tiefpassfilter (26) impliziert, wobei das Ausgangssignal das höhere Signal der zwei Filter ist.

5. System nach einem der Ansprüche 3 oder 4, **dadurch gekennzeichnet, dass** die vorgenannte Berechnung die Anwendung einer Verstärkung auf das Signal des Hochpassfilters (24) impliziert, die in Abhängigkeit von der Geschwindigkeit des Fahrzeugs schwankt, um die Reaktivität des Systems zu modifizieren.

Fig.1

EP 1 544 078 B1

CM → .17. → .20. → .21.

.22. ← 13

18

.19.

9

.8.

Fig. 2

Fig.3

Fig.4

EP 1 544 078 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10319537 A1